# EUROPEAN PATENT APPLICATION

(11) **EP 2 423 590 A2**
(43) Date of publication of application: **29.02.2012**
(21) Application number: 11178242.1
(22) Date of filing: 22.08.2011
(51) Int. Cl.: F23C 9/00

(54) **Control system, control method, and display method of oxygen combustion boiler plant**

(30) Priority: 31.08.2010 JP 2010193068
(71) Applicant: Hitachi Ltd., Tokyo 100-8280 (JP)
(72) Inventor: Sekiai, Takaaki, Tokyo, 100-8220 (JP); Taniguchi, Masayuki, Tokyo, 100-8220 (JP); Hayashi, Yoshiharu, Tokyo, 100-8220 (JP); Shibata, Tsuyoshi, Tokyo, 100-8220 (JP); Kusumi, Naohiro, Tokyo, 100-8220 (JP); Okazaki, Teruyuki, Tokyo, 100-8220 (JP); Nagai, Katsunori, Tokyo, 100-8220 (JP); Shimizu, Satoru, Tokyo, 100-8220 (JP); Fukai, Masayuki, Tokyo, 100-8220 (JP)
(74) Representative: Beetz & Partner

(57) **Abstract**

A control system of an oxygen combustion boiler plant comprising a boiler for burning fuel by a burner and an air port to generate steam using gas including oxygen of higher-concentration than that in air and gas including carbon dioxide of higher-concentration than that in air, exhaust gas circulation means for using, as the gas including carbon dioxide, a part of boiler exhaust gas as circulation exhaust gas, and carbon dioxide capture means for capturing the carbon oxide in the boiler exhaust gas, characterized in that, the control system (400) further comprising: burning rate calculation means (500) for calculating a burning rate of the fuel at a pipe for transferring fuel or in a neighborhood of a burner exit, burning temperature calculation means (600) for calculating a burning temperature of a boiler furnace portion, and oxygen flow rate and exhaust gas recirculation flow rate decision means (700) for deciding an exhaust gas recirculation flow rate and an oxygen flow rate to be fed to the burner and the air port so as to make the burning rate and the burning temperature meet the set values.

## Description

### BACKGROUND OF THE INVENTION

### (Field of the Invention)

The present invention relates to a control system, a control method and a display method of an oxygen combustion boiler plant.

### (Description of Related Art)

In a thermal power plant using a boiler and a steam turbine as main components, it is pointed out that the discharge rate of carbon dioxide that is a factor of global warming is higher than those of other power generation systems.

Therefore, when burning fuel by the boiler, in place of conventional use of air, a method of burning fuel with high-purity oxygen is proposed. Hereinafter, this method is called oxygen combustion and the combustion method by air is called air combustion.

In the oxygen combustion, a large part of exhaust gas becomes carbon dioxide, so that when capturing carbon dioxide from the exhaust gas, there is no need to enrich the carbon dioxide, and it is possible to directly cool the exhaust gas, thereby liquefying and separating the carbon dioxide, and it is one of the effective methods of reducing the carbon dioxide discharge rate.

Further, nitrogen occupying about 80% of air is not fed to the boiler, so that a nitrogen oxide (thermal NOx) generated from nitrogen in the air will not be generated and a nitrogen oxide reduction effect can be expected.

The oxygen combustion boiler burns fuel using high-purity oxygen in place of air, though when using only oxygen, the flame temperature increases excessively, thus there is a fear of damage caused to the burner and boiler furnace wall, so that a method of circulating a part of boiler exhaust gas and mixing it with oxygen to burn is proposed.

In the Patent document 1, a method of controlling the circulation gas flow rate of boiler exhaust gas so as to make the total heat absorption rate of the boiler equal to the target heat absorption rate, that is, by installing a system for mixing oxygen with circulation exhaust gas and feeding the mixture to the boiler body and a system for feeding oxygen directly to the boiler body, controlling the heat absorption rate of the boiler body by changing the oxygen flow rates fed to both systems is described.

Further, a method of starting by air combustion at the start time and switching to the oxygen combustion at a predetermined load is proposed and in the Patent document 2, a method of regulating the atmospheric flow rate at the start time so as to make the exit oxygen concentration of the boiler body equal to a set value of the exit oxygen concentration, regulating the flow rate of oxygen fed from the high-purity air separation unit after start completion so as to make the exit oxygen concentration of the boiler body equal to a set value of the exit oxygen concentration, and regulating the exhaust gas circulation flow rate so as to make the entrance oxygen concentration of the boiler body equal to a set value of the entrance oxygen concentration is described.
Patent document 1: Japanese Patent Laid-open No. 2007-147162
Patent document 2: Japanese Patent Laid-open No. 2001-336736

### SUMMARY OF THE INVENTION

In the boiler of the oxygen combustion system, the oxygen flow rate in feed gas and the exhaust gas recirculation flow rate can be changed independently of each other. Appropriate control of these rates leads to a stable and safe operation of the plant.

If the oxygen concentration of coal transfer gas is high, combustion starts earlier than the furnace of the boiler and there is a possibility that the coal transfer pipe may be damaged. Further, if the oxygen flow rate fed to the burner is low, coal is not burnt in the boiler furnace and there is a possibility of non-ignition. To prevent the damage to the coal transfer pipe and non-ignition, the mixing rate of the coal transfer gas, exhaust gas of combustion regulation gas, and oxygen must be controlled appropriately.

Further, in order to efficiently operate the boiler, it is important to keep the burning temperature in the boiler furnace at the design value. The burning temperature in the boiler furnace depends upon the coal transfer gas, combustion regulation gas, and gas to be fed to the after air port, so that the mixing rate of exhaust gas of these gases and oxygen must be controlled appropriately.

In the patent documents aforementioned, how to mix exhaust gas of each of the coal transfer gas, combustion regulation gas, and gas to be fed to the after air port with oxygen is not described.

An object of the present invention is to provide a control system and a control method capable of deciding the exhaust gas recirculation flow rate and oxygen flow rate so as to make the burning rate and burning temperature coincide with preset vales.

A control system of an oxygen combustion boiler plant comprising a boiler for burning fuel by a burner and an air port to generate steam using gas including oxygen of higher-concentration than that in air and gas including carbon dioxide of higher-concentration than that in air, exhaust gas circulation means for using, as the gas including carbon dioxide, a part of boiler exhaust gas as circulation exhaust gas, and carbon dioxide capture means for capturing the carbon oxide in the boiler exhaust gas, characterized in that, the control system (400) further comprising: burning rate calculation means (500) for calculating a burning rate of the fuel at a pipe for transferring fuel or in a neighborhood of a burner exit,
burning temperature calculation means (600) for calculating a burning temperature of a boiler furnace portion, and oxygen flow rate and exhaust gas recirculation flow rate decision means (700) for deciding an exhaust gas recirculation flow rate and an oxygen flow rate to be fed to the burner and the air port so as to make the burning rate and the burning temperature meet the set values.

According to the present invention, so as to make the burning rate and burning temperature coincide with preset values, the exhaust gas recirculation flow rate and oxygen flow rate can be decided.

### BRIEF DESCRIPTION OF THE DRAWINGS

Fig. 1 is a drawing for illustrating the constitution of the control system and oxygen combustion boiler plant of the first embodiment of the present invention,
Fig. 2 is a drawing for illustrating the constitution of the water-steam system of the embodiment and an arrangement example of the burner and air port of the boiler furnace,
Fig. 3 is an operation flow chart of the control system of this embodiment,
Fig. 4 is a drawing for illustrating an embodiment of the burning rate calculation means and burning temperature calculation means of the control system of this embodiment,
Fig. 5 is a drawing for illustrating an embodiment of the oxygen flow rate and exhaust gas recirculation flow rate decision means of this embodiment,
Fig. 6 is a drawing for illustrating an operation example of the control system of the first embodiment of the present invention,
Fig. 7 is a drawing for illustrating a screen displayed on the image display unit of the control system of the first embodiment of the present invention,
Fig. 8 is a drawing for illustrating the constitution of the control system and oxygen combustion boiler plant of the second embodiment of the present invention,
Fig. 9 is a drawing for illustrating an embodiment of the fuel flow rate prediction means of the second embodiment, and
Fig. 10 is a drawing for illustrating an operation example of the control system of the second embodiment of the present invention.

### DETAILED DESCRIPTION OF THE INVENTION

### [Embodiment 1]

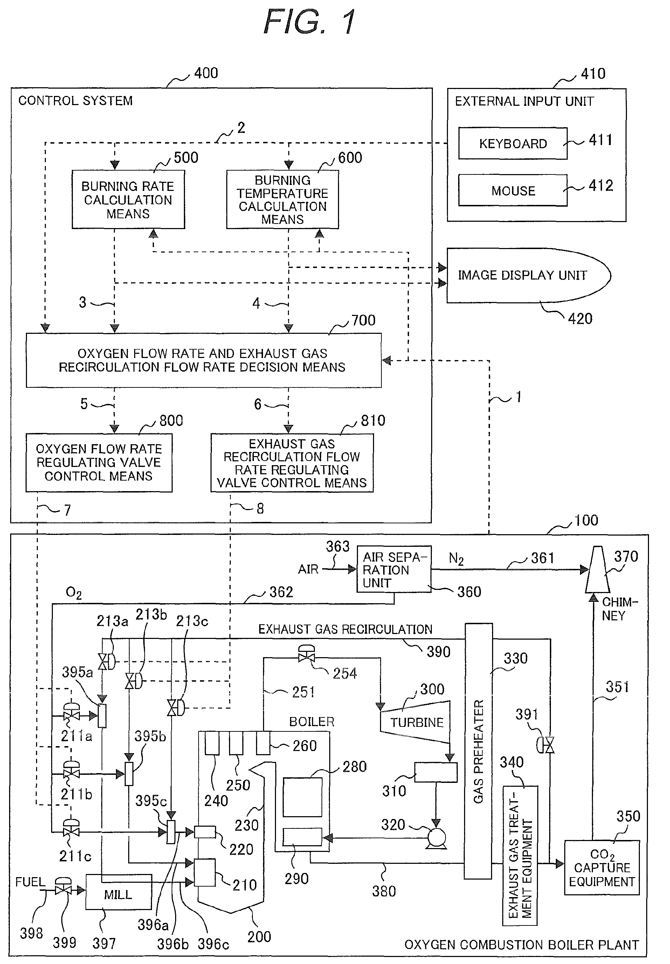

Hereinafter, the control system of an oxygen combustion boiler plant as a first embodiment of the present invention will be explained by referring to the accompanying drawings. Fig. 1 shows an embodiment of the present invention using an example of a power generation plant using coal as fuel. A control system 400 of the present invention receives measurement information 1 of a process value from a plant to be controlled, performs a pre-programmed operation in the control system 400 using it, and transmits an operation instruction signal (control signal) to an oxygen combustion boiler plant 100. The plant, according to the received operation instruction signal, permits the actuator to perform an operation such as regulation of the opening angle of the valve or the opening angle of the damper, and thereby controls the condition of the plant.

This embodiment is a thermal power plant comprising the main components of a boiler 200 and a steam turbine 300 driven by steam generated by the boiler 200 (no generator is drawn). The control system 400 receives a load request instruction from the central power supply instruction unit and on the basis of it, controls the plant in a designated load (generated output) condition. The valve opening angle of a steam adjusting valve 254 is regulated, thus the steam flow rate of main steam 251 led to the turbine 300 is changed and the generated output is changed.

In addition, in the water-steam system, there is a condenser 310 for cooling steam discharged from the steam turbine 300 to a liquid and a feed water pump 320 for feeding the water cooled by the condenser 310 again to the boiler 200 as boiler feed water. Further, although not drawn, in an actual plant, there is a feed water heater for preheating boiler feed water using a part of steam (extraction steam) pulled out from the middle stage of the steam turbine 300 as a heating source.

On the other hand, in the system of exhaust gas 380 discharged from the boiler, there are a gas preheater 330, exhaust gas treatment equipment 340 for purifying exhaust gas, CO₂ capture equipment 350 (carbon dioxide capture equipment) for cooling, liquefying, and capturing carbon dioxide in the exhaust gas, and a chimney 370 for discharging gas mainly composed of nitrogen and oxygen 351 which is mainly composed of the residual nitrogen and oxygen after capture of carbon dioxide.

This embodiment, although a conventional boiler burns fuel with air, aims at a boiler of the oxygen combustion system for burning fuel using gas including high-purity oxygen in place of air and a plant including the boiler of the oxygen combustion system.

Therefore, as shown in Fig. 1, this embodiment includes an air separation unit 360 for separating air to gas mainly composed of nitrogen and gas mainly composed of oxygen, thereby producing high-concentration oxygen. The air separation unit is a system for cooling air and separating it using a difference in the boiling point between oxygen and nitrogen. This embodiment does not depend upon the air separation method and may be another method such as a film separation system for separating air using a difference in size between nitrogen molecules and oxygen molecules.

The air separation unit 360 separates air 363 to high-purity oxygen gas 362 and gas mainly composed of nitrogen 361 mainly including nitrogen and the gas mainly composed of nitrogen 361 is discharged into the atmosphere from the chimney 370.

If fuel is burned using only high-purity oxygen in place of air, the flame temperature increases excessively high, thus there is a possibility that the burner for burning fuel and boiler wall surface may be damaged. Therefore, the high-purity oxygen gas 362 produced by the air separation unit 360 is mixed with recirculation exhaust gas 390 which is a part of exhaust gas discharged from the boiler and is fed to a burner 210.

The recirculation exhaust gas 390 takes out a part of the gas after purification by the exhaust gas treatment equipment 340 and raises it in temperature by the gas preheater 330. The opening angle of a circulation exhaust gas flow rate regulating valve 391 is changed, thus the flow rate of circulation exhaust gas is regulated.

Coal 398 that is fuel is fed to a coal pulverizer (mill) 397 via a fuel feed rate regulating valve 399. The coal is reduced to powder (pulverized coal) by the mill 397, is transferred by gas, and is fed to the burner 210.

To the burner 210, a mixture 396c of coal and coal transfer gas and combustion regulation gas 396b are fed. Further, above the burner 210, an after air port 220 is arranged and to the after air port 220, gas 396a is fed.

The coal transfer gas, combustion regulation gas, and gas fed to the after air port are gases that are mixed with the exhaust gas and oxygen. The quantities of exhaust gas and oxygen to be mixed can be controlled by regulating the oxygen flow rate regulating valves 211 (211a, 211b, 211c) and exhaust gas recirculation flow rate regulating valves 213 (213a, 213b, 213c). Further, exhaust gas and oxygen are mixed by gas mixing units 395 (395a, 395b, 395c).

Next, the constitution of the boiler will be explained.

The furnace wherein the burner for burning fuel is installed internally becomes high in temperature, so that it has a cooling wall called a water wall 230 for cooling the entire wall surface and capturing heat of exhaust gas. In the boiler 200, there is additionally installed a heat exchanger composed of an economizer 290, a primary superheater 280, a secondary superheater 240, a tertiary superheater 250, and a quartic superheater 260 and by these superheaters, the heat of the combustion gas is captured and high-temperature steam is generated.

Further, although not described in the drawing, in the plant, many sensors for measuring the gas composition, temperature, and pressure and the steam temperature and pressure are arranged and the measurement results are transmitted to the control system 400 as measurement information 1.

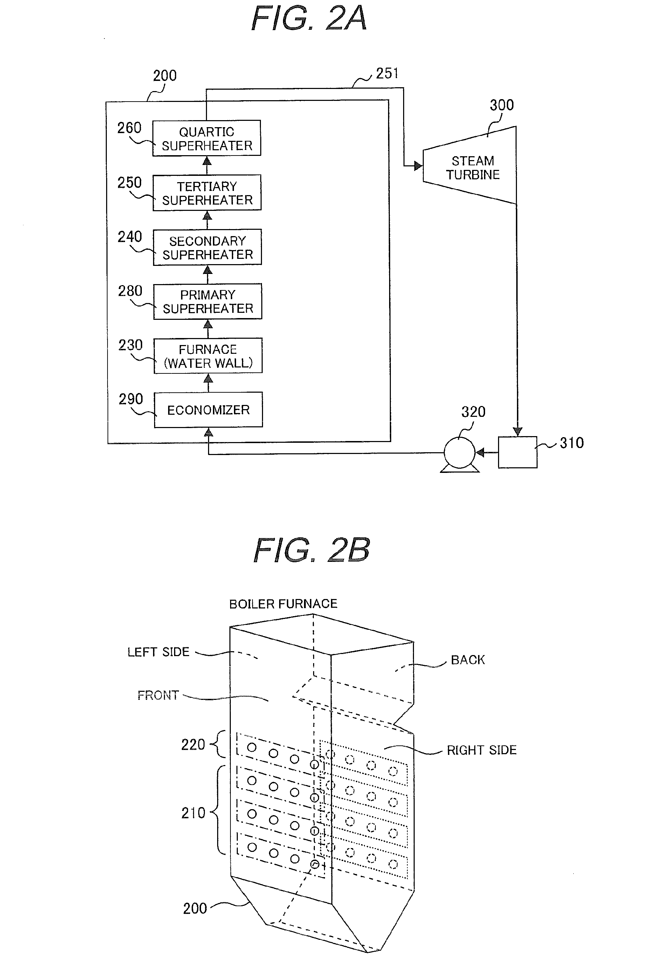

As shown in Fig. 2(a), as a flow of steam, boiler feed water is firstly led to the economizer 290, then passes through the water wall 230, the primary superheater 280, the secondary superheater 240, the tertiary superheater 250, and the quartic superheater 260 in this order, is raised in temperature, and enters the steam turbine 300 as main steam 251. A cycle is executed that the steam working in the high-pressure steam turbine 300 is changed to a liquid by the condenser 310 and is fed again to the boiler by the feed water pump 320. Further, as shown in Fig. 2(b), it is general that with respect to the burner 210 of the boiler, before and behind the furnace, several burners are installed horizontally and several burner stages are installed in the height direction and with respect to the after air port, before and behind the furnace, several after air ports are installed horizontally. Hereinafter, the height of the after air ports arranged is called a furnace upper portion and the height of the burners arranged is called a furnace lower portion.

Next, the constitution and function of the control system 400 relating to this embodiment will be explained. The control system 400, basically, controls the plant on the basis of a load request instruction from the central power supply instruction unit. The object of the control system of this embodiment is to appropriately control the mixing rate of exhaust gas and oxygen in the coal transfer gas, combustion regulation gas, and gas fed to the after air port, so that in Fig. 1, the control logic is described.

If the oxygen concentration in the coal transfer gas is high, the combustion starts earlier than the boiler furnace and there is a possibility that the coal transfer pipe may be damaged. Further, if the oxygen flow rate fed to the burner 210 is low, coal is not burnt in the boiler furnace and there is a possibility of non-ignition. To prevent the damage to the coal transfer pipe and non-ignition, the mixing rate of the coal transfer gas, exhaust gas of combustion regulation gas, and oxygen must be controlled appropriately.

Further, to efficiently operate the boiler, it is important to keep the combustion temperature in the boiler furnace at the design value. The combustion temperature in the boiler furnace depends upon the coal transfer gas, combustion regulation gas, and gas to be fed to the after air port, so that the mixing rate of exhaust gas of these gases and oxygen must be controlled appropriately.

Therefore, the control system 400 of this embodiment comprises a burning rate calculation means 500 and a burning temperature calculation means 600 and decides the mixing rate of exhaust gas and oxygen so as to make the burning rate and burning temperature coincide with preset values.

The burning rates of the mixture of the coal transfer gas and coal and the gas of the burner section are controlled, thus the combustion earlier than the boiler furnace and non-ignition can be suppressed. Further, the burning temperature in the boiler furnace is controlled, thus the boiler is operated efficiently.

The burning rate calculation means 500 and the burning temperature calculation means 600, respectively using the measurement information 1 and an external input signal 2 from an external input unit 410 composed of a keyboard 411 and a mouse 412, output a burning rate 3 which is a burning rate calculation result of the burning rate calculation means 500 and a burning temperature 4 which is a burning temperature calculation result of the burning temperature calculation means 600. The burning rate 3 and the burning temperature 4 are output to an image display unit 420 and the burning rate and burning temperature can be monitored in real time.

An oxygen flow rate and exhaust gas recirculation flow rate decision means 700 for deciding the oxygen flow rate and exhaust gas flow rate, using the burning rate 3, the burning temperature 4, the external input signal 2, and the measurement information 1, outputs an oxygen flow rate instruction value 5 and an exhaust gas recirculation flow rate instruction value 6.

An oxygen flow rate regulating valve control means 800, so as to make the oxygen flow rate included in the coal transfer gas, combustion regulation gas, and gas fed to the after air port coincide with the oxygen flow rate instruction value 5, outputs an operation signal 7 of the oxygen flow rate regulating valves 211a, 211b, and 211c. Further, an exhaust gas recirculation flow rate regulating valve control means 810, so as to make the exhaust gas flow rate included in the coal transfer gas, combustion regulation gas, and gas fed to the after air port coincide with the exhaust gas recirculation flow rate instruction value 6, outputs an operation signal 8 of the exhaust gas recirculation flow rate regulating valves 213a, 213b, and 213c.

Further, as described by referring to Fig. 2(b), in the boiler, several burners and after air ports are installed. The oxygen and exhaust gas pipes are complicated, thus a disadvantage that many flow rate regulating valves are necessary is caused, though to realize more thorough control, the oxygen flow rate and exhaust gas flow rate for each stage or for each piece can be respectively regulated.

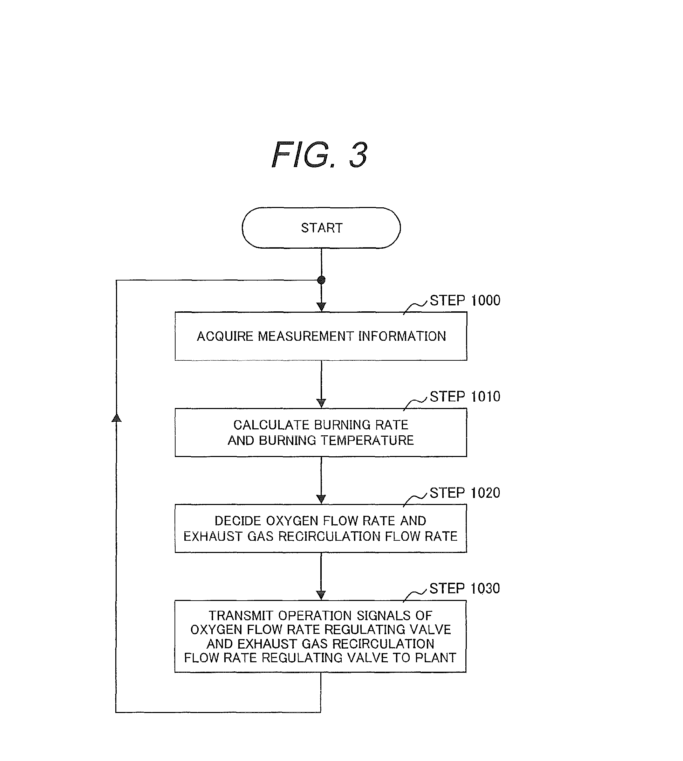

An operation flow chart of the control system 400 is shown in Fig. 3. As shown in Fig. 3, the flow chart is executed using a combination of Steps 1000, 1010, 1020, and 1030.

Firstly, Step 1000 acquires the measurement information 1 and reads it into the control system 400. Step 1010 permits the burning rate calculation means 500 and the burning temperature calculation means 600 to operate and calculates the burning rate 3 and the burning temperature 4. Step 1020 permits the oxygen flow rate and exhaust gas recirculation flow rate decision means 700 to operate and calculates the oxygen flow rate instruction value 5 and the exhaust gas recirculation flow rate instruction value 6. Step 1030 permits the oxygen flow rate regulating valve control means 800 and the exhaust gas recirculation flow rate regulating valve control means 810 to operate, transmits the operation signal 7 and the operation signal 8 to the oxygen combustion boiler plant 100, and operates the flow rate regulating valves (211a, 211b, 211c, 213a, 213b, 213c). Steps 1000 to 1030 repeatedly execute the respective operations in the cycle of acquiring the measurement information 1 or a preset cycle.

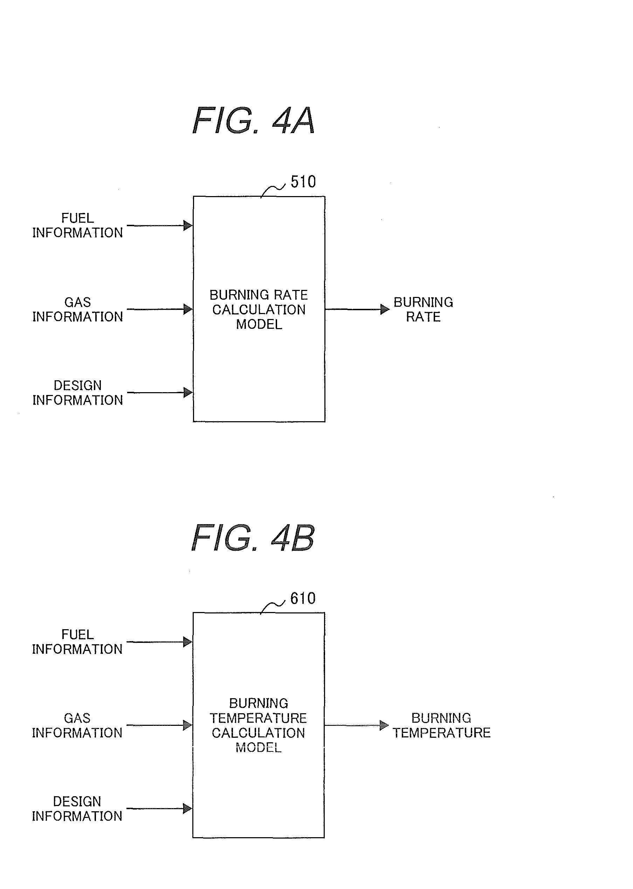

Next, the embodiment of the burning rate calculation means 500 and the burning temperature calculation means 600 will be explained by referring to Fig. 4.

As shown in Fig. 4(a), the burning rate calculation means 500 is composed of a burning rate calculation model 510.

The burning rate calculation model 510, on the basis of the fuel information, gas information, and design information, calculates the burning rate of the coaling system and the burning rate of the burner section. Here, the fuel information is quantities indicating the characteristics of the fuel (coal) such as the fuel properties, fuel concentration, fuel particle diameter, and fuel temperature. The gas information is quantities indicating the characteristics of the gas such as the gas concentration, gas properties (specific heat, etc.), and gas components (contained oxygen flow rate, etc.). Further, the design information is quantities indicating the characteristics of the plant such as the burner shape and boiler shape.

Using the fuel information, gas information, and design information, the burning rate calculation model 510, for example, using the three-dimensional combustion numeric analytical art, calculates the burning rate. Here, the three-dimensional combustion analytical art is an art of dividing the burner and boiler into three-dimensional meshes and numerically analyzing the combustion condition on the basis of the physical formula in each mesh. In this embodiment, the three-dimensional combustion analytical method is not characterized and a well-known analytical art can be used, so that here, a concrete calculation algorithm is omitted. Further, the burning rate calculation model 510 can be structured, for plural fuel information, gas information, and design information, so as to preserve results of execution of the three-dimensional combustion analysis aforementioned in the data base and output calculation results most suited to the current operation condition.

As shown in Fig. 4(b), the burning temperature calculation means 600 is composed of a burning temperature calculation model 610. The burning temperature calculation model 610, by the same method as that of the burning rate calculation model 510 aforementioned, calculates the burning temperature of the boiler furnace.

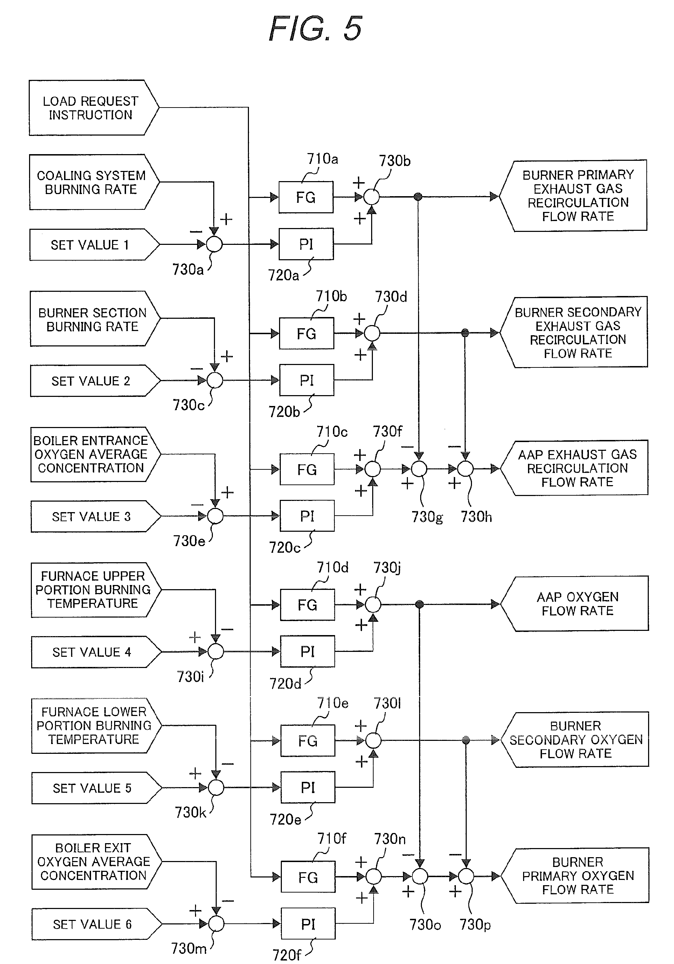

Next, the embodiment of the oxygen flow rate and exhaust gas recirculation flow rate decision means 700 will be explained by referring to Fig. 5. In Fig. 5, "Burner primary" means coal transfer gas, and "Burner secondary" means combustion regulation gas, and "AAP" means gas fed to the after air port.

Further, an adder-subtracter 730 is a module for adding the signals recorded with a symbol of "+" in the drawing and subtracting the signals recorded with a symbol of "-". A function generator 710, assuming an input signal as x, is a module for outputting a function f(x). A proportional integration controller 720, assuming an input signal as x', is a module for outputting proportional integration operation results of Px' + (1/I) ∫ x'dt. Here, P indicates a proportional gain and I indicates integration time.

Further, the set values 1 to 6 are values set by an operator using the external input unit 410. The set value 1 indicates a target value of the coaling system burning rate, the set value 2 a target value of the burner section burning rate, the set value 3 a target value of the boiler entrance oxygen average concentration, the set value 4 a target value of the furnace upper portion burning rate, the set value 5 a target value of the furnace lower portion burning rate, and the set value 6 a target value of the boiler exit oxygen average concentration.

The function generator 710, on the basis of a load request signal, outputs the basic values of the exhaust gas and oxygen flow rates. A function generator 710a outputs the basic value of the burner primary exhaust gas recirculation flow rate, a function generator 710b outputs the basic value of the burner secondary exhaust gas recirculation flow rate, a function generator 710c outputs the basic value of the total value of the exhaust gas recirculation flow rates, a function generator 710d outputs the basic value of the AAP oxygen flow rate, a function generator 710e outputs the basic value of the burner secondary oxygen flow rate, and a function generator 710f outputs the basic value of the total value of the oxygen flow rates, respectively.

The proportional integration controller 720, so as to make the burning rate, burning temperature, and oxygen concentration coincide with the target values, operates by correcting each exhaust flow rate and the oxygen flow rate.

A proportional integration controller 720a, so as to make the coaling system burning rate coincide with the set value, corrects the burner primary exhaust gas recirculation flow rate. A proportional integration controller 720b, so as to make the burning rate of the burner section coincide with the set value, corrects the burner secondary exhaust gas recirculation flow rate. A proportional integration controller 720c, so as to make the boiler entrance oxygen average concentration coincide with the set value, corrects the total value of the exhaust gas recirculation flow rates. From the corrected exhaust gas recirculation flow rate, the burner primary exhaust gas recirculation flow rate and the burner secondary exhaust gas recirculation flow rate are subtracted, thus the AAP exhaust gas recirculation flow rate is decided.

A proportional integration controller 720d, so as to make the furnace upper portion burning temperature coincide with the set value, corrects the AAP oxygen flow rate. A proportional integration controller 720e, so as to make the furnace lower portion burning temperature coincide with the set value, corrects the burner secondary oxygen flow rate. A proportional integration controller 720f, so as to make the boiler exit oxygen average concentration coincide with the set value, corrects the total value of the oxygen flow rates. From the corrected oxygen flow rate, the AAP oxygen flow rate and the burner secondary oxygen flow rate are subtracted, and thus the burner primary oxygen flow rate is decided.

Further, the execution method of the oxygen flow rate and exhaust gas recirculation flow rate decision means 700 is not limited to the logic shown in Fig. 5 and logic for deciding the exhaust gas flow rate and oxygen flow rate so as to make the burning rate and burning temperature coincide with the target values is acceptable.

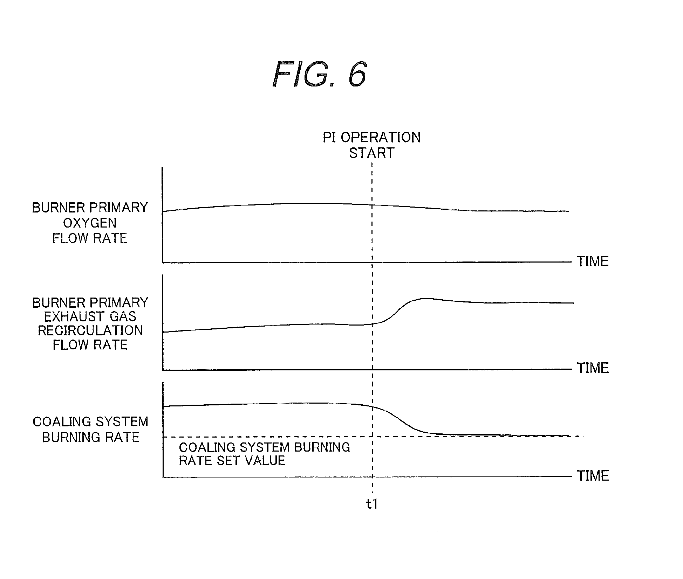

Next, by referring to Fig. 6, an example of the results of the operation of the control system in the first embodiment of the present invention will be explained. In this embodiment, the control of the coaling system burning rate will be explained.

Before the time t1, the proportional integration controller does not operate and the oxygen flow rate and exhaust gas flow rate are the basic values based on the load request instruction. The burning rate of the coaling system is assumed to change in a higher condition than the preset value.

At the time t1 the proportional integration controller is operated, thus the exhaust gas recirculation flow rate is increased and the burning rate of the coaling system coincides with the set value. By use of the control system of the present invention, as in this embodiment, the burning rate can be controlled. Although the explanation by referring to the drawing is omitted, similarly to this embodiment, the burning temperature can be controlled.

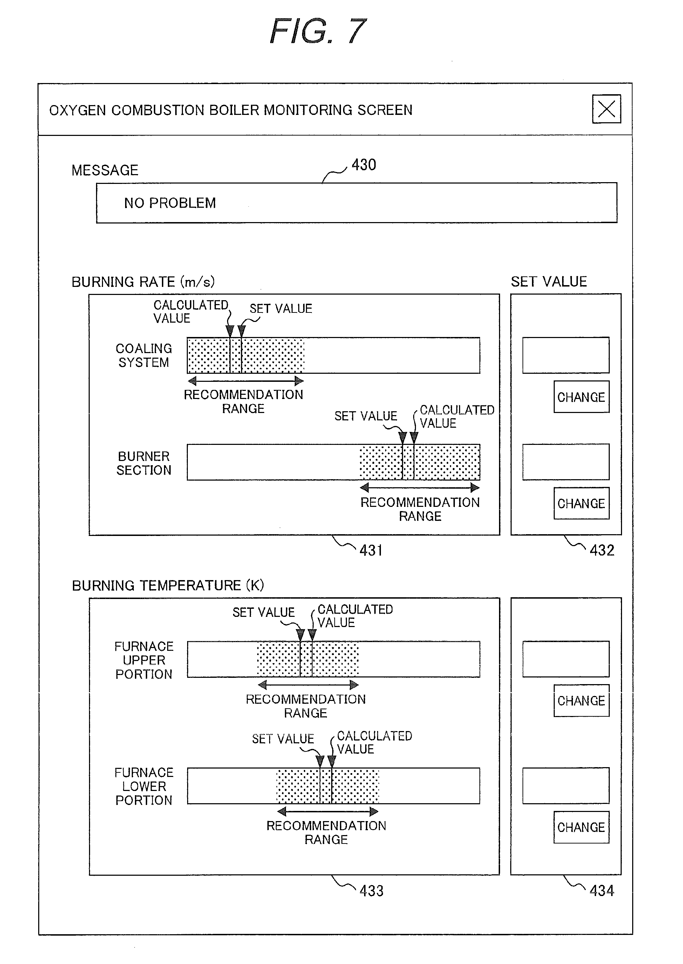

Fig. 7 is a drawing for illustrating the embodiment of the screen displayed on the image display unit 420.

In a display column 431, the calculation results and set values of the burning rate of the coaling system and the burner section are displayed. Further, the range of the burning rate of non-catching of fire in the coaling system and the range of the burning rate of no non-ignition in the burner section are respectively displayed as a recommendation range. This information is always monitored, thus whether the plant can be operated safely or not can be confirmed. Further, using the external input unit 410, the set value of the burning rate is input in a column 432, thus the set value of the burning rate can be changed. The changed value is reflected to the set value 1 and the set value 2 shown in Fig. 5.

In a display column 433, the calculation results and set values of the burning temperature of the furnace upper portion and furnace lower portion are displayed. Further, the burning temperature ranges within which an efficient operation can be performed are respectively displayed as a recommendation range. This information is always monitored, thus whether the plant can be operated highly efficiently or not can be confirmed. Further, using the external input unit 410, the set value of the burning temperature is input in a column 434, thus the set value of the burning temperature can be changed. The changed value is reflected to the set value 4 and the set value 5 shown in Fig. 5.

In a display column 430, when the calculated value or set value is within the predetermined recommendation range, a message that there is no problem is displayed and when the calculated value or set value is outside the recommendation range, an error is displayed.

As mentioned above, in this embodiment, the information of the burning temperature and burning rate is provided to an operator in real time and the monitoring work of the plant operation condition can be supported.

Further, in this embodiment, the danger such as non-ignition or pipe damage can be reduced, so that the stability and safety of the operation are improved. Further, the plant can be operated efficiently.

Furthermore, the reliability of the boiler plant of the oxygen combustion system suited for capture of carbon dioxide is improved, so that this embodiment can contribute to reduction in the discharge rate of carbon dioxide which is one of the causes of global warming.

Further, the plant operation condition shown in Fig. 6 may be displayed on the image display unit 420. In the example shown in Fig. 6, the coaling system burning rate and the burner primary exhaust gas recirculation flow rate and burner primary oxygen flow rate are displayed by comparison. As mentioned above, the burning rate or burning temperature and the exhaust gas recirculation flow rate or oxygen flow rate are displayed by comparison, so that this embodiment can support the operator so as to confirm the comparison relation between the burning rate and temperature and the exhaust gas recirculation flow rate-oxygen flow rate. In Fig. 6, the horizontal axis indicates time and the aforementioned values are displayed by trend graphs, though numerical values may be displayed.

Further, in the example shown in Fig. 6, when displaying the coaling system burning rate and the burner primary exhaust gas recirculation flow rate and burner primary oxygen flow rate by comparison, as the PI operation start time, the time axis indicates the basic display common to both. For example, in Fig. 6, the convergent time of changes in the coaling system burning rate and the convergent time of changes in the burner primary exhaust gas recirculation flow rate can be confirmed by comparison. As mentioned above, when comparing the burning rate and temperature with the exhaust gas recirculation flow rate-oxygen flow rate, as a basic display common to both, the time axis is used, thus the relation of both in the time series can be confirmed.

Further, in the example shown in Fig. 6, as a basic display common to both, the PI operation start is displayed, though the basic display is not limited to it and the change start point of time of the coaling system burning rate may be displayed as a standard or the point of time when setting the set value of the coaling system burning rate may be displayed as a standard. By doing this, the relation of the effect on the exhaust gas recirculation flow rate-oxygen flow rate at the start point of the change of the burning rate and burning temperature can be confirmed.

Further, the display of Fig. 6 is explained on the assumption of the burning rate calculation means 500, the burning temperature calculation means 600, and the oxygen flow rate and exhaust gas recirculation flow rate decision means 700 which are shown in Fig. 1, though the display is not limited to it. In place of the burning rate 3 and the burning temperature 4 which are calculated from the burning rate calculation means 500 and the burning temperature calculation means 600, using a measurement value measured from a measuring instrument installed and in place of the oxygen flow rate instruction value 5 and the exhaust gas recirculation flow rate instruction value 6 which are calculated by the oxygen flow rate and exhaust gas recirculation flow rate decision means 700 or the operation signals 7 and 8 based on them, using a measurement value measured from a measuring instrument installed, the data may be displayed.

As mentioned above, the control system of the oxygen combustion boiler plant comprising a boiler for burning fuel by the burner and air port, to generate steam using gas including oxygen of higher-concentration than that in air and gas including carbon dioxide of higher-concentration than that in air, an exhaust gas circulation means for using, as the aforementioned gas including carbon dioxide, a part of boiler exhaust gas as circulation exhaust gas, and a carbon dioxide capture means for capturing carbon oxide in the boiler exhaust gas, characterized in that, the control system further comprising: the burning rate calculation means for calculating the burning rate of fuel at the pipe for transferring fuel or in the vicinity of the burner exit on the basis of the measurement information of the oxygen combustion boiler plant and a predetermined calculation method, the burning temperature calculation means for calculating the burning temperature of the boiler furnace portion on the basis of the measurement information of the oxygen combustion boiler plant and a predetermined calculation method, and the oxygen flow rate and exhaust gas recirculation flow rate decision means for deciding the exhaust gas recirculation flow rate and oxygen flow rate which are fed to the burner and air port on the basis of the burning rate, the burning temperature, the set values, and a predetermined calculation method, the exhaust gas recirculation flow rate and oxygen flow rate can be decided so as to make the burning rate and burning temperature coincide with preset values.

Further, as mentioned above, the display method of the control system of the oxygen combustion boiler plant comprising the boiler for burning fuel by the burner and air port, to generate steam using gas including higher-concentration oxygen than that in air and gas including higher-concentration carbon dioxide than that in air, the exhaust gas circulation means for using, as the aforementioned gas including carbon dioxide, a part of the boiler exhaust gas as circulation exhaust gas, and the carbon dioxide capture means for capturing the carbon dioxide in the exhaust gas of the boiler, characterized in that, the control system further comprising: a data base recording the fuel burning rate or burning temperature and a data base recording the exhaust gas recirculation flow rate or oxygen flow rate to be fed to the burner or air port for displaying the burning rate or burning temperature and the exhaust gas recirculation flow rate or oxygen flow rate by comparison, the correspondence of the burning rate and temperature to the exhaust gas recirculation flow rate and oxygen flow rate can be confirmed.

### [Embodiment 2]

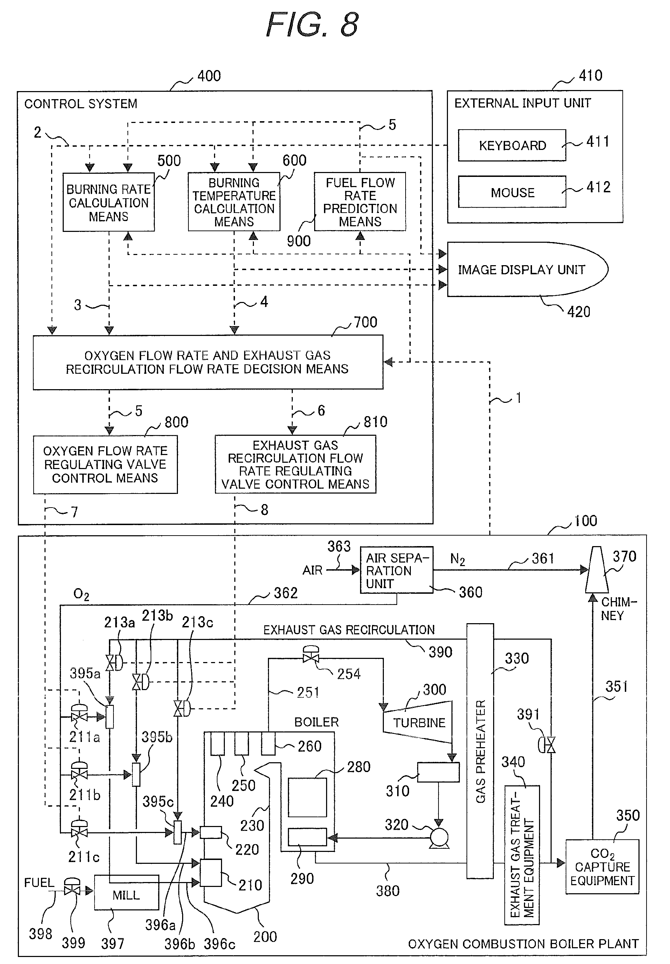

Next, the control system of an oxygen combustion boiler plant as a second embodiment of the present invention will be explained by referring to Fig. 8.

A difference from Fig. 1 is that in the control system 400, a fuel flow rate prediction means 900 is loaded.

The fuel flow rate fed to the boiler is controlled to maintain the steam temperature and generated output. Therefore, when the generated output is changed and so forth, the fuel flow rate may be changed. If the fuel flow rate is changed, the burning rate and burning temperature are changed. Following the change, to maintain the burning rate and burning temperature, the oxygen flow rate must be changed. However, in the operation of the air separation unit 360, there exist dead time and delay time, so that a great change in the oxygen flow rate may not be made immediately. To solve the problem, the control system of the second embodiment of the present invention predicts a change of the fuel flow rate and on the basis of the prediction result, previously controls the oxygen flow rate. By doing this, even when the fuel flow rate is changed, the burning rate and burning temperature can be maintained at the set values. To realize such control, in the control system of the present invention, the fuel flow rate prediction means 900 is loaded. The fuel flow rate predicted value 5 output by the fuel flow rate prediction means 900 is input to the burning rate calculation means 500 and the burning temperature calculation means 600. The burning rate calculation means 500 and the burning temperature calculation means 600, on the basis of the fuel flow rate predicted value, output the predicted values of the burning rate and burning temperature.

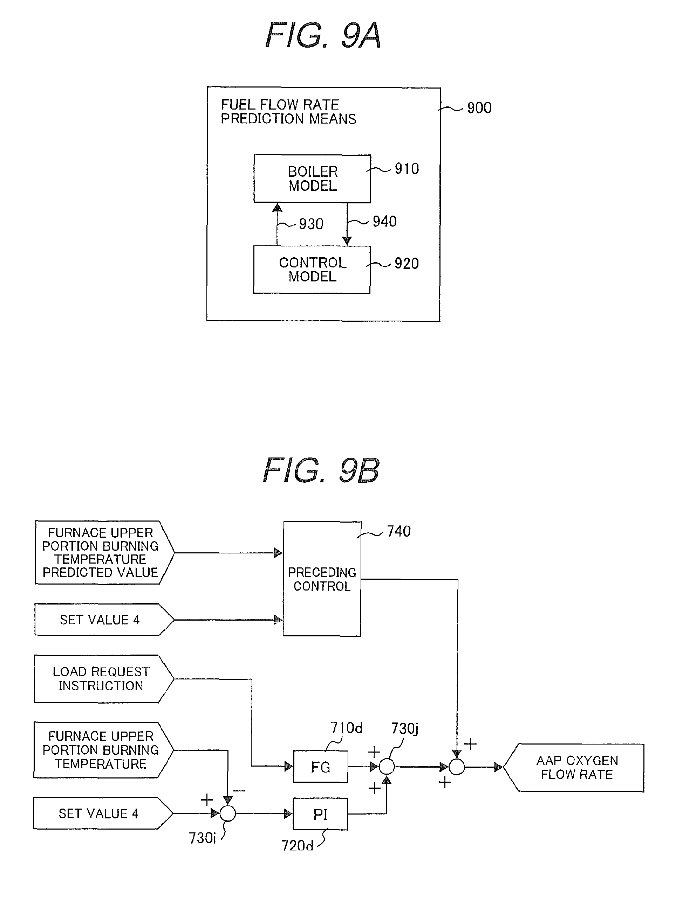

Fig. 9(a) is a drawing for illustrating the embodiment of the fuel flow rate prediction means 900. The fuel flow rate prediction means 900 is comprised of a combination of a boiler model 910 for imitating the special characteristic of the boiler and a control model 920 for imitating the control operation. The control model 920 outputs an operation condition 930 such as the fuel flow rate to the boiler model 910. The boiler model 910 calculates the steam temperature and generated output on the basis of the operation condition 930 and outputs a calculation result 940 to the control model 920. The boiler model 910 and the control model 920 are operated, thus a value that the fuel flow rate for controlling the steam temperature and generated output will become in the future can be predicted. Further, the measurement information 1 is used for regulation of the boiler model 910 and preparation of an initial condition of calculation.

Fig. 9(b) is a drawing for illustrating the embodiment of the oxygen flow rate and exhaust gas recirculation flow rate decision means 700. In Fig. 9(b), only the logic for controlling the AAP oxygen flow rate is described. A difference from the logic for controlling the AAP oxygen flow rate shown in Fig. 5 is that a preceding control block 740 is added. The preceding control block 740, so as to make the furnace upper portion burning temperature predicted value calculated on the basis of the predicted value of the fuel flow rate coincide with the set value, previously controls the AAP oxygen flow rate. To logic for controlling another flow rate, a preceding control block is added. Therefore, the control in consideration of the dead time and delay time of the air separation unit 360 can be executed and the burning temperature can be prevented from deviation from the target value.

Further, in this embodiment, the fuel flow rate, burning rate, and predicted value of the burning temperature can be displayed on the image display unit 420.

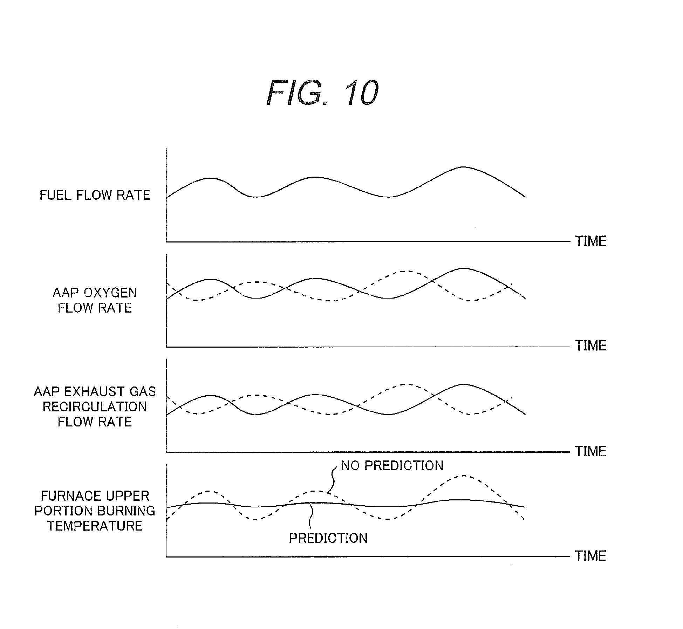

Next, by referring to Fig. 10, the result that the control system of the second embodiment of the present invention is operated will be explained. In this embodiment, the control of the furnace upper portion burning temperature will be explained.

As mentioned previously, the fuel flow rate for maintaining the steam temperature and generated output is changed. If they are controlled without using the fuel flow rate prediction means 900, the following oxygen flow rate is delayed, thus the fuel temperature is changed greatly.

The future value of the fuel flow rate is predicted by using the fuel flow rate prediction means 900 and the oxygen flow rate is controlled in accordance with it, thus the burning temperature can be prevented from changing. The explanation by using the drawing is omitted, though similarly to this embodiment, the burning rate can be prevented from changing.

As mentioned above, by the control system having the fuel flow rate prediction means for predicting the future value of the fuel flow rate on the basis of the boiler model for imitating the special characteristic of the boiler and the control model for imitating the control operation to the boiler, wherein the burning rate calculation means or the burning temperature calculation means, on the basis of the future value of the fuel flow rate, outputs the predicted value of the burning rate or the burning temperature and the oxygen flow rate and exhaust gas recirculation flow rate decision means, on the basis of the predicted value of the burning rate or the predicted value of the fuel flow rate, decides the oxygen flow rate and exhaust gas recirculation flow rate by the preceding control, even when the fuel flow rate is changed, the burning rate and burning temperature can be maintained at the set values.

As mentioned above, by use of the control system of each embodiment of the present invention, the burning rate and burning temperature can be controlled to desired values (set values), so that dangers such as non-ignition or pipe damage can be reduced. As a result, the stability and safety of the operation are improved. Further, the plant can be operated efficiently. Furthermore, by monitoring the burning rate and burning temperature, the oxygen combustion boiler can be operated.

On the other hand, the recent progress of global warming is becoming worse and reduction in the discharge rate of greenhouse gases represented by carbon dioxide is required strongly. It is pointed out that in a thermal power station for producing steam by heat obtained by burning fuel, thereby generating power, compared with other power generation systems, the discharge rate of carbon oxide is higher. On the other hand, the worldwide power demands are apt to increase continuously and from the viewpoint of a stable supply of electric power, it is true that thermal power generation plays an important role as a power source facility.

According to each embodiment of the present invention, safe and stable operation can be performed, so that a thermal power system capable of expecting a great reduction in the discharge rate of carbon dioxide which is the greatest advantage of the oxygen combustion boiler system can be realized and the stable supply of power and the environment preservation can be made compatible with each other.

Further, the present invention is not limited to the embodiments aforementioned and includes various deformation examples. For example, the embodiments aforementioned are explained in detail to make the present invention clear and are not always limited to an embodiment including all the constitutions explained. Further, a part of the constitution of a certain embodiment can be replaced with the constitution of another embodiment and the constitution of a certain embodiment can be added the constitution of another embodiment. Further, for a part of the constitution of each embodiment, addition, deletion, and replacement of another constitution can be performed.

Further, for each constitution, function, processing unit, and processing means aforementioned, a part of them or all of them may be realized by hardware, for example, by designing with an integrated circuit. Further, each constitution, function, and others aforementioned, by interpreting and executing the program for realizing each function by the processor, may be realized by software.

The information such as the program for realizing each function, table, file, measurement information, and calculation information can be loaded on a recording unit such as a memory, a hard disk, or a solid state drive (SSD) or a recording medium such as an IC card, an SD card, or a DVD. Therefore, each processing and each constitution can realize each function as a processing unit or a program module.

Further, with respect to the control line and information line, those considered to be necessary for explanation are indicated and all the control lines and information lines are not always indicated on products. Practically, almost all the constitutions may be considered to be mutually connected.

The present invention can be used for the oxygen combustion boiler system and a control method capable of expecting a great reduction in the discharge rate of carbon dioxide.

The above embodiments of the invention as well as the appended claims and figures show multiple characterizing features of the invention in specific combinations. The skilled person will easily be able to consider further combinations or sub-combinations of these features in order to adapt the invention as defined in the in the claims to his specific needs.

## Claims

1. A control system of an oxygen combustion boiler plant comprising a boiler for burning fuel by a burner and an air port to generate steam using gas including oxygen of higher-concentration than that in air and gas including carbon dioxide of higher-concentration than that in air, exhaust gas circulation means for using, as the gas including carbon dioxide, a part of boiler exhaust gas as circulation exhaust gas, and carbon dioxide capture means for capturing the carbon oxide in the boiler exhaust gas, **characterized in that**,
the control system (400) further comprises:
burning rate calculation means (500) for calculating a burning rate of the fuel at a pipe for transferring fuel or in a neighborhood of a burner exit on the basis of measurement information of the oxygen combustion boiler plant and a predetermined calculation method,
burning temperature calculation means (600) for calculating a burning temperature of a boiler furnace portion on the basis of the measurement information of the oxygen combustion boiler plant and the predetermined calculation method, and
oxygen flow rate and exhaust gas recirculation flow rate decision means (700) for determining an exhaust gas recirculation flow rate and an oxygen flow rate to be fed to the burner and the air port on the basis of the burning rate, the burning temperature, set values, and the predetermined calculation method so as to make the burning rate and the burning temperature meet the set values.

2. The control system of an oxygen combustion boiler plant according to Claim 1, wherein:
the burning rate calculation means (500) and the burning temperature calculation means (600) are composed of:
models for calculating the burning rate and the burning temperature on the basis of fuel information indicating characteristics of the fuel, gas information indicating characteristics of the gas, and design information indicating characteristics of the plant, respectively.

3. The control system of an oxygen combustion boiler plant according to Claim 1 or 2, wherein:
the oxygen flow rate and exhaust gas recirculation flow rate decision means (700) comprising:
a first processing unit for deciding an exhaust gas recirculation flow rate of gas used to transfer the fuel so as to make the burning rate of the pipe for transferring
the fuel coincide with a set value thereof, a secondprocessing unit for deciding the exhaust gas recirculation flow rate of combustion regulation gas fed to the burner so as to make the burning rate in the neighborhood of the burner exit coincide with a set value thereof, and a third processing unit for deciding the exhaust gas recirculation flow rate of gas fed to the air port by subtracting a total amount of the exhaust gas recirculation flow rates used for fuel transfer and combustion regulation of the burner from
a total amount of the exhaust gas recirculation flow rates determined so as to make a boiler entrance oxygen average concentration coincide with a set value thereof, and
a fourth processing unit for deciding an oxygen flow rate of gas fed to the air port so as to make the burning temperature of a furnace upper portion coincide with a set value thereof, a fifth processing unit for deciding the oxygen flow rate of combustion regulation gas fed to the burner so as to make the burning temperature of a furnace lower portion coincide with a set value thereof, and a sixth processing unit for deciding the oxygen flow rate of the gas used for fuel transfer by subtracting a total
amount of the oxygen flow rates fed to the air port and the
combustion regulation gas from a total amount of the oxygen flow rates determined so as to make a boiler exit oxygen average concentration coincide with a set value thereof.

4. The control system of an oxygen combustion boiler plant according one of the preceding claims, the control system (400)further comprising:
an image display unit for displaying results calculated by the burning rate calculation means (500) and the burning temperature calculation means (600), the set values of the burning rate and the burning temperature, and
recommendation ranges of the burning rate and the burning temperature on a same screen.

5. The control system of an oxygen combustion boiler plant according to one of the preceding claims, the control system (400) further comprising:
fuel flow rate prediction means (900) for predicting a future value of a fuel flow rate on the basis of a boiler model for imitating special characteristics of the boiler and a control model for imitating a control operation to the boiler, wherein the burning rate calculation means (500) or the burning temperature calculation means (600), on the basis of the future value of the fuel flow rate, outputs a predicted value of the burning rate or the burning temperature and the oxygen flow rate and exhaust gas recirculation flow rate decision means (700), on the basis of the predicted value of the burning rate or the predicted value of the fuel flow rate, determines the oxygen flow rate and the exhaust gas recirculation flow rate by preceding control.

6. A control method of an oxygen combustion boiler plant comprising a boiler for burning fuel by a burner and
an air port, to generate steam using gas including higher-concentration oxygen than that in air and gas including higher-concentration carbon dioxide than that in air, exhaust gas circulation means for using, as the gas including carbon dioxide, a part of boiler exhaust gas as circulation exhaust gas, and carbon dioxide capture means for capturing the carbon dioxide in the boiler exhaust gas, **characterized in that**,
a burning rate (500) of fuel at a pipe for transferring fuel or in a neighborhood of a burner exit and a burning temperature (600) of a boiler furnace portion is calculated on the basis of measurement information of the oxygen combustion boiler plant and a predetermined calculation method, and
an exhaust gas recirculation flow rate and an oxygen flow rate (700) to be fed to the burner and the air port is determined on the basis of the burning rate, the burning temperature, set values, and the predetermined calculation method so as to make the burning rate and the burning temperature meet the set values.

7. The control method of an oxygen combustion boiler plant according to Claim 6, wherein:
the burning rate (500) and the burning temperature (600) is calculated on the basis of fuel information indicating characteristics of the fuel, gas information indicating characteristics of the gas, and design information indicating characteristics of the plant.

8. The control method of an oxygen combustion boiler plant according to Claim 6 or 7, wherein:
an exhaust gas recirculation flow rate of gas used to transfer the fuel is determined so as to make the burning rate of the pipe for transferring the fuel coincide with a set value thereof, the exhaust gas recirculation flow rate of combustion regulation gas fed to the burner is determined so as to make the burning rate in the neighborhood of the burner exit coincide with a set value thereof, and the exhaust gas recirculation flow rate of gas fed to the air port by subtracting a total amount of the exhaust gas recirculation flow rates used for fuel transfer and combustion regulation of the burner from a total amount of the exhaust gas recirculation flow rates is determined so as to make a boiler entrance oxygen average concentration coincide with a set value thereof, and· further
an oxygen flow rate of gas fed to the air port is determined so as to make the burning temperature of a furnace upper portion coincide with a set value thereof, the oxygen flow rate of the combustion regulation gas fed to the burner is determined so as to make the burning temperature of a furnace lower portion coincide with a set value thereof, and the oxygen flow rate of gas used for fuel transfer is calculated by subtracting a total amount of the oxygen flow rates fed to the air port and the combustion regulation gas from a total amount of the oxygen flow rates determined so as to make a boiler exit oxygen average concentration coincide with a set value thereof.

9. The control method of an oxygen combustion boiler plant according to one of claims 6 to 8, wherein:
a future value of a fuel flow rate (900) is calculated on the basis of a boiler model for imitating special characteristics of the boiler and a control model for imitating a control operation to the boiler, and
a predicted value of the burning rate (500) or the burning temperature (600) is outputted on the basis of a future value of the fuel flow rate and the oxygen flow rate or the exhaust gas recirculation flow rate (700) is determined by preceding control on the basis of a predicted value of the burning rate (500) or a predicted value of the fuel
flow rate (600).

10. A. display method of a control system of an oxygen combustion boiler plant comprising a boiler for burning fuel by a burner and an air port to generate steam using gas including higher-concentration oxygen than that in air and gas including higher-concentration carbon dioxide than that in air, exhaust gas circulation means for using, as the gas including carbon dioxide, a part of boiler exhaust gas as circulation exhaust gas, and carbon dioxide capture means for capturing the carbon dioxide in the exhaust gas of the boiler, **characterized in that**,
the control system further comprises:
a data base recording the fuel burning rate (500) or burning temperature (600) and
a data base recording the exhaust gas recirculation flow rate or the oxygen flow rate (700) to be fed to the burner or the air port,
wherein the burning rate (500) or the burning temperature (600) and the exhaust gas recirculation flow rate or the oxygen flow rate (700) are displayed by comparison.

11. The display method of a control system according to Claim 10, wherein when displaying the values by comparison, as a basic display common to the two compared values, the values are displayed using a time axis.

12. The display method of a control system according to Claim 11, wherein the basic display is displayed on the basis of a change start point of time of the burning rate or a point of time when setting a set value of the burning rate.
